(19) 

**Europäisches Patentamt**
**European Patent Office**
**Office européen des brevets**

(11) **EP 4 682 995 A1**

(12) **EUROPEAN PATENT APPLICATION**
published in accordance with Art. 153(4) EPC

(43) Date of publication:
**21.01.2026 Bulletin 2026/04**

(21) Application number: **24878446.4**

(22) Date of filing: **13.05.2024**

(51) International Patent Classification (IPC):
$H01M\ 4/62^{(2006.01)}$    $H01M\ 4/131^{(2010.01)}$
$H01M\ 4/52^{(2010.01)}$    $H01M\ 4/66^{(2006.01)}$

(52) Cooperative Patent Classification (CPC):
**H01M 4/131; H01M 4/52; H01M 4/62; H01M 4/66;**
**H01M 10/0525; H01M 10/058; Y02E 60/10**

(86) International application number:
**PCT/CN2024/092890**

(87) International publication number:
**WO 2025/081793 (24.04.2025 Gazette 2025/17)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **19.10.2023 CN 202311355800**

(71) Applicant: **Contemporary Amperex Technology**
**Co., Limited**
**Jiaocheng District**
**Ningde**
**Fujian 352100 (CN)**

(72) Inventors:
 • **WU, Kai**
  **Ningde, Fujian 352100 (CN)**

 • **JI, Cheng**
  **Ningde, Fujian 352100 (CN)**
 • **LI, Baiqing**
  **Ningde, Fujian 352100 (CN)**
 • **JIN, Haizu**
  **Ningde, Fujian 352100 (CN)**
 • **PENG, Shuangjuan**
  **Ningde, Fujian 352100 (CN)**
 • **PENG, Lin**
  **Ningde, Fujian 352100 (CN)**
 • **XIAO, Zhiwei**
  **Ningde, Fujian 352100 (CN)**

(74) Representative: **Ziebig Hengelhaupt Intellectual**
**Property Attorneys**
**Patentanwaltskanzlei PartGmbB**
**Leipziger Straße 49**
**10117 Berlin (DE)**

(54) **ELECTRODE ASSEMBLY, SECONDARY BATTERY AND ELECTRIC DEVICE**

(57)    The present application belongs to the technical field of batteries and particularly relates to an electrode assembly, a secondary battery, and an electrical apparatus. The electrode assembly includes a positive electrode plate, a negative electrode plate and a separator. The positive electrode plate includes a positive electrode current collector and a positive electrode film layer arranged on at least one side surface of the positive electrode current collector. The positive electrode film layer in the present application includes a nickel-containing compound and a binder. A molar percentage content of a nickel element in the nickel-containing compound based on a total molar amount of transition elements is Y, and a mass percentage content of the binder in the positive electrode film layer is X; and it is satisfied: Y/X<53. The electrode assembly designed in the present application is conducive to improving the safety of a lithium-ion battery.

FIG. 5

**Description**

**CROSS-REFERENCE TO RELATED APPLICATION**

The present application claims the priority of Chinese Patent Application No. 202311355800.0 filed on October 19, 2023 and entitled "ELECTRODE ASSEMBLY, SECONDARY BATTERY, AND ELECTRICAL APPARATUS", the entire content of which is incorporated herein by reference.

**TECHNICAL FIELD**

The present application relates to the field of batteries, in particular to an electrode assembly, a secondary battery, and an electrical apparatus.

**BACKGROUND**

In recent years, secondary batteries have made great progress, especially the rapid development of pure electric new energy vehicles using secondary batteries represented by lithium-ion batteries as power units is remarkable.
As the application scope of secondary batteries becomes wider and wider, the requirements for battery performance get higher and higher, the energy density of secondary batteries also get higher and higher, and thus safety hazards become particularly serious. At present, the safety of secondary batteries represented by lithium-ion batteries still needs to be improved.

**SUMMARY**

In view of the above problems, the present application provides an electrode assembly, a secondary battery, and an electrical apparatus, which is conducive to improving safety of lithium-ion batteries.
In a first aspect, the present application provides an electrode assembly, including:

a positive electrode plate, including a positive electrode current collector and a positive electrode film layer arranged on at least one side surface of the positive electrode current collector;
a negative electrode plate; and
a separator;
where the positive electrode film layer includes a nickel-containing compound and a binder, a molar percentage content of a nickel element in the nickel-containing compound based on a total molar amount of transition elements is Y; a mass percentage content of the binder in the positive electrode film layer is X; and it is satisfied: $Y/X<53$.

The binder in the positive electrode film layer of the present application can improve its binding ability with the current collector. For example, during a cutting process of positive and negative electrodes, a probability of overlap joint between a conductive layer and the negative electrode caused by a positive electrode active material falling off the current collector is reduced, and even the quantity of falling-off active materials during the cutting process of the positive and negative electrodes is reduced. On the other hand, the above relationship is satisfied between a content of the binder and the molar percentage content of the nickel element in the nickel-containing compound to improve a matching degree between the binder and the nickel-containing compound, thereby increasing a resistance of a positive electrode diaphragm, and ultimately increasing a resistance value when a short circuit occurs due to overlap joint so as to reduce a probability of battery failure. In summary, the electrode assembly designed in the present application can improve the safety of a lithium-ion battery on the premise of ensuring an energy density of the lithium-ion battery.
In some implementations of the present application, the molar percentage content Y of the nickel element in the nickel-containing compound and the mass percentage content X of the binder in the positive electrode film layer satisfy: $3\leq Y/X<53$.
In some implementations of the present application, the molar percentage content Y of the nickel element satisfies: $30\%\leq Y\leq 100\%$.
In some implementation of the present application, the mass percentage content X of the binder in the positive electrode film layer satisfies: $1\%\leq X\leq 10\%$.
In some implementations of the present application, the positive electrode film layer satisfies any one of the following:

in a case of (1.1) $80\%\leq Y\leq 100\%$, it is satisfied: $8\leq Y/X\leq 40$;
in a case of (1.2) $50\%<Y<80\%$, it is satisfied: $5<Y/X<53$; and

in a case of (1.3)30%≤Y≤50%, it is satisfied: 3≤Y/X≤50.

In some implementations of the present application, the positive electrode film layer satisfies any one of the following:

in a case of (2.1)80%≤Y≤100%, 2.5%≤X≤10%;
in a case of (2.2)50%<Y<80%, 1.5%≤X≤10%; and
in a case of (2.3)30%≤Y≤50%, 1%≤X≤10%.

In some implementations of the present application, in a case that the positive electrode plate has a compacted density of 3.5 g/cm$^3$, any one of the following is satisfied:

in a case of (3.1)80%≤Y≤100%, a resistance of the positive electrode plate is ≥1.81 mΩ;
in a case of (3.2)50%<Y<80%, the resistance of the positive electrode plate is ≥0.40 mΩ; and
in a case of (3.3)30%≤Y≤50%, the resistance of the positive electrode plate is ≥0.30 mΩ.

In some implementations of the present application, the negative electrode plate includes a negative electrode current collector, the positive electrode current collector and/or the negative electrode current collector is a composite current collector, and the composite current collector includes a support layer and a conductive layer arranged on at least one side surface of the support layer; and a thickness of the conductive layer is not greater than a thickness of the support layer.
The thickness of the support layer in the electrode assembly of the present application is not less than the thickness of the conductive layer. The support layer is configured to provide effective support for the conductive layer. The composite current collector formed by the support layer and the conductive layer can reduce the number of burrs generated during the cutting process of the positive and negative electrodes compared to conventional metal current collectors, thereby reducing a short circuit area.
In some implementations of the present application, the thickness of the support layer and the molar percentage content of the nickel element in the nickel-containing compound satisfy:

$$D1 \geq Y \times 10 + 2;$$

where D1 is the thickness of the support layer and has a unit of μm; and
Y is the molar percentage content % of the nickel element in the nickel-containing compound.

In some implementations of the present application, the thickness of the support layer satisfies: 2 μm≤D1≤30 μm, preferably, 5 μm≤D1≤20 μm.
In some implementations of the present application, the thickness of the conductive layer is D2, satisfying:D2≤3 μm; preferably, 30 nm≤D2≤3 μm.
In some implementations of the present application, the composite current collector further includes a protective layer located on at least one side surface of the conductive layer.
In some implementations of the present application, the thickness of the protective layer is D4, and D4 and the thickness D2 of the conductive layer satisfy: D4≤0.1×D2;

preferably, 1 nm≤D4≤200 nm; and
more preferably, 20 nm≤D4≤150 nm.

In some implementations of the present application, a thickness of the positive electrode film layer is D3, and D3 and the thickness D1 of the support layer satisfy: 1≤D3/D1≤300.
In some implementations of the present application, the thickness D3 of the positive electrode film layer satisfies: 10 μm≤D3≤300 μm, preferably, 80 μm≤D3≤200 μm.
In some implementations of the present application, a shrinkage rate of the separator in 130°C includes an MD shrinkage rate and a TD shrinkage rate;

the MD shrinkage rate and/or TD shrinkage rate are/is ≤(13-Y×10)/100;
Y is the molar percentage content % of the nickel element in the nickel-containing compound;
the MD shrinkage rate is a heat shrinkage rate measured in a machine direction of the separator; and
the TD shrinkage rate is a heat shrinkage rate measured in a transverse direction of the separator.

In some implementations of the present application, the separator includes a base membrane and a coating arranged on at least one side surface of the base membrane; and

preferably, the coating includes an organic polymer fiber, and the organic polymer fiber includes one or a combination of two or more of an aramid fiber, a polyacrylonitrile fiber, a polyimide fiber, a polycarbonate fiber, a polyphenylene sulfide fiber, a polyetheretherketone fiber, a polysulfone fiber, and a polyarylate fiber.

In some implementations of the present application, the nickel-containing compound includes one or a combination of two or more of a lithium nickel oxide, a lithium nickel cobalt oxide, a lithium nickel manganese oxide, a lithium nickel cobalt manganese oxide, a lithium nickel cobalt aluminum oxide, and modified compounds thereof.

In some implementations of the present application, the binder includes a fluoropolymer, and the fluoropolymer includes one or a combination of two or more of polyvinylidene fluoride, vinylidene fluoride-tetrafluoroethylene-propylene terpolymer, vinylidene fluoride-hexafluoropropylene tetrafluoroethylene terpolymer, and fluorine-containing acrylate resin.

A second aspect of the present application provides a secondary battery, including the electrode assembly described in the first aspect.

A third aspect of the present application provides an electrical apparatus, including the electrode assembly described in the first aspect or the secondary battery described in the second aspect.

The foregoing descriptions are merely an overview of the technical solutions in the present application. In order to more clearly understand technical means of the present application, the technical solutions can be implemented according to the content of the specification, and in order to make the foregoing and other objectives, features, and advantages of the present application clearer and easier to understand, specific implementations of the present application are described below.

## DESCRIPTION OF DRAWINGS

By reading the detailed description of the preferred embodiments below, various other advantages and benefits will become apparent to those of ordinary skill in the art. The accompanying drawings are used for the purpose of illustrating the preferred implementations only and are not considered as a limitation to the present application. Moreover, throughout the accompanying drawings, the same components are indicated by the same reference numerals. In the accompanying drawings:

FIG. 1 is a schematic diagram of a lithium-ion battery in some embodiments of the present application.
FIG. 2 is a schematic structural exploded view of a lithium-ion battery in some embodiments of the present application.
FIG. 3 is a schematic diagram of a positive electrode plate in some embodiments of the present application.
FIG. 4 is a schematic diagram of a positive electrode plate in some embodiments of the present application.
FIG. 5 is a schematic diagram of a positive electrode plate in some embodiments of the present application.
FIG. 6 is a schematic diagram of a negative electrode plate in some embodiments of the present application.
FIG. 7 is a schematic diagram of a resistance test for a positive electrode film layer in some embodiments of the present application.

Reference numerals in the Detailed Description are as follows:

5, lithium-ion battery; 51, shell; 52, electrode assembly; and 53, cover plate.
100, positive electrode plate; 110, positive electrode current collector; 120, positive electrode film layer; 111, first support layer; 112, first conductive layer; 113, first protective layer;
200, negative electrode plate; 210, negative electrode current collector; 220, negative electrode film layer; 211, second support layer; and 212, second conductive layer.
Coordinate axis x direction: length direction of the negative electrode current collector; and
coordinate axis x direction: thickness direction of the negative electrode current collector.

## DETAILED DESCRIPTION

Hereinafter, implementations of an electrode assembly, a secondary battery and an electrical apparatus of the present application are described in detail and specifically disclosed with appropriate reference to the accompanying drawings. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, it is expected that a range from 60 to 120 and a range from 80 to 110, if listed for specific parameters, are understood as a range from 60 to 110 and a range from 80 to 120. In addition, if the listed minimum range values are 1 and 2 and if the listed maximum range values are 3, 4, and 5, all the following ranges can be expected: 1-3, 1-4, 1-5, 2-3, 2-4, and 2-5. In the present application, unless otherwise stated, a numerical range "a-b" represents an abbreviated representation of any combination of real numbers between a and b, where a and b are both real numbers. For example, the numerical range "0-5" indicates that all real numbers between "0-5" have been listed herein, and "0-5" is only a shortened representation of these numerical combinations. In addition, when a parameter is expressed as an integer $\geq 2$, it is equivalent to disclosing that the parameter is, for example, an integer of 2, 3, 4, 5, 6, 7, 8, 9, 10, 11, 12, etc.

Unless otherwise specified, all the embodiments and optional embodiments of the present application can be combined with each other form new technical solutions.

Unless otherwise specified, all technical features and optional technical features of the present application may be combined with each other to form new technical solutions.

Unless otherwise particularly stated, all steps in the present application may be performed in sequence or randomly, preferably in sequence. For example, the method includes steps (a) and (b), which means that the method may include steps (a) and (b) performed in sequence, or may include steps (b) and (a) performed in sequence. For example, it is mentioned that the method may further include step (c), which means that step (c) may be added to the method in any order. For example, the method may include steps (a), (b) and (c), or may further include steps (a), (c) and (b), or may further include steps (c), (a) and (b), and the like.

Unless otherwise particularly stated, the "including" and "comprising" mentioned in the present application mean inclusive or exclusive. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, any one of the following conditions satisfies the condition "A or B": A is true (or present) and B is false (or absent); A is false (or absent) and B is true (or present); or both A and B are true (or present).

Unless otherwise particularly stated, in the present application, terms "first," "second" and the like, are used only to distinguish different objects and are not to be understood as indicating or implying a relative significance or implicitly specifying the number, particular order, or primary and secondary relationship of the technical features indicated.

Unless otherwise particularly stated, in the present application, the term "a plurality of" refers to two or more (including two). Similarly, "a plurality of groups" refers to two or more groups (including two groups), and "a plurality of sheets" refers to two or more sheets (including two sheets).

Unless otherwise particularly stated, the orientation or positional relationships indicated by the technical terms "center," "longitudinal," "transverse," "length," "width," "thickness," "upper," "lower," "front," "back," "left," "right," "vertical," "horizontal," "top," "bottom," "inner," "outer," "clockwise," "counterclockwise," "axial," "radial," "circumferential," etc. are the orientation or positional relationships shown in the accompanying drawings, and are only for convenience of description of the embodiments of the present application and simplification of the description, instead of indicating or implying that the indicated apparatus or element must have a specific orientation, be constructed and operated in a specific orientation, and therefore, cannot be understood as a limitation to the embodiments of the present application.

Unless otherwise expressly specified and limited, the technical terms such as "mount," "connected," "connect" and "fix" should be understood in a broad sense, for example, it may be a fixed connection or a detachable connection or be integrated; or may be a mechanical connection or an electrical connection; or may be a direct connection or an indirect connection through an intermediate medium, or may be a communication between the interiors of two elements or an interaction relationship of two elements. For those of ordinary skill in the art, specific meanings of the above terms in the embodiments of the present application may be understood on a case-by-case basis.

As the application scope of secondary batteries becomes wider and wider, the requirements for battery performance get higher and higher, the energy density of secondary batteries also get higher and higher, and thus safety hazards become particularly serious. Taking a lithium-ion battery as an example, there are many factors of risks that affect its safety. In summary, the factors mentioned mainly include mechanical abuse, electrical abuse and thermal abuse. The main manifestations are that mechanical abuse and electrical abuse cause occurrence of an abnormal current or a side reaction inside the battery, which leads to abnormal internal temperature rise and ultimately thermal runaway, explosion or even outbreak of a fire.

A research has discovered that for a lithium-ion battery whose positive electrode material contains a nickel-containing compound, cation ($Li^{2+}/Ni^{3+}$) mixing is prone to occurring during an actual charging and discharging process, which affects the structural stability of the material. As the nickel content increases, this phenomenon becomes more obvious, and the safety issue caused by increased conductivity also becomes more serious.

Existing technologies usually improve the battery safety by improving the materials or battery components, but this type of improvement usually takes a long cycle.

The factors for the failure of the lithium-ion battery include: internal short circuit, high temperature, overvoltage, etc. If we can start from the factors of failure, it is beneficial to improving the safety of the lithium-ion.

Based on the above considerations, the problem that the existing lithium-ion batteries have high energy density but cannot take the safety into account is to be solved. Based on the above design concept and experimental research, an electrode assembly, a secondary battery and an electrical apparatus are obtained.

First, the present application provides an electrode assembly. The electrode assembly includes a positive electrode plate, a negative electrode plate and a separator. The positive electrode plate includes a positive electrode current collector and a positive electrode film layer located on at least one side surface of the positive electrode current collector. The positive electrode film layer in the present application includes a nickel-containing compound and a binder. A molar percentage content of a nickel element in the nickel-containing compound based on a total molar amount of transition elements is Y; a mass percentage content of the binder in the positive electrode film layer is X; and it is satisfied: Y/X<53.

The binder in the positive electrode film layer of the present application can improve its binding ability with the current collector. For example, during a cutting process of positive and negative electrodes, a probability of overlap joint between a conductive layer and the negative electrode caused by a positive electrode active material falling off the current collector is reduced, and even the quantity of falling-off active materials during the cutting process of the positive and negative electrodes is reduced. On the other hand, the above relationship is satisfied between a content of the binder and the molar percentage content of the nickel element in the nickel-containing compound, under this relationship, the content of the binder and a content of the nickel-containing compound reasonably match, thereby increasing a resistance of a positive electrode diaphragm, and with increase of a resistance value, though overlap joint occurs to the positive and negative electrodes, the probability of battery failure can also be reduced. In summary, the electrode assembly designed in the present application can improve the safety of a lithium-ion battery on the premise of ensuring an energy density of the lithium-ion battery.

The electrode assembly provided by the present application has both a certain energy density and a certain safety factor, and the electrode assembly is made into a secondary battery. The secondary battery may include an outer package. The outer package can be used for encapsulating the above electrode assembly and electrolyte. The outer package of the secondary battery may be a hard shell, such as a hard plastic shell, an aluminum shell, a steel shell, etc. The outer package of the secondary battery may also be a soft package, for example, a bag-type soft package. The material of the soft package can be plastic, and examples of the plastic can include polypropylene, polybutylene terephthalate, polybutylene succinate, etc.

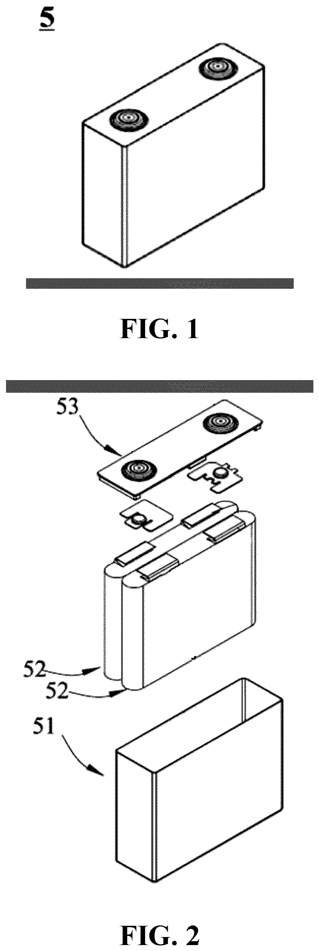

The shape of the secondary battery is not particularly limited in the present application, and may be a cylinder, a square, or any other shape. For example, FIG. 1 shows an example of a lithium-ion battery 5 having a square structure.

In some embodiments of the present application, referring to FIG. 2, the outer package may include a shell 51 and a cover plate 53. The shell 51 may include a bottom plate and a side plate connected to the bottom plate, and an accommodating cavity is enclosed with the bottom plate and the side plate. The case 51 has an opening in communication with the accommodating cavity, and the cover plate 53 may cover the opening to close the accommodating cavity. The positive electrode plate, the negative electrode plate and the separator may be formed into an electrode assembly 52 by a winding process or a stacking process. The electrode assembly 52 is encapsulated in the accommodating cavity. The electrode assembly 52 is impregnated with an electrolyte solution. The number of electrode assemblies 52 contained in the lithium-ion battery 5 may be one or more, which may be selected by those skilled in the art according to specific actual requirements.

According to some embodiments of the present application, the secondary battery is used for the electrical apparatus. The secondary battery may be applied to, but not limited to, electrical apparatuses such as vehicles, ships or aircrafts. Further, the electrical apparatus is used in a power supply system to achieve the technical purpose of improving safety.

An embodiment of the present application provides an electrical apparatus adopting the secondary battery as a power supply. The electrical apparatus may include, but is not limited to, a mobile phone, a tablet computer, a laptop, an electric toy, an electric tool, a battery car, an electric vehicle, a ship, a spacecraft, and the like. The electric toy may include fixed or mobile electric toys, such as a game machine, an electric vehicle toy, an electric ship toy, and an electric airplane toy, etc. The spacecraft may include an airplane, a rocket, a space shuttle and a spaceship, etc.

## Electrode assembly

The present application provides an electrode assembly. The electrode assembly includes a positive electrode plate, a negative electrode plate and a separator. The positive electrode plate includes a positive electrode current collector and a positive electrode film layer arranged on at least one side surface of the positive electrode current collector. The negative electrode plate includes a negative electrode current collector and a negative electrode film layer. The positive electrode film layer includes a nickel-containing compound and a binder. A molar percentage content of a nickel element in the nickel-containing compound based on a total molar amount of transition elements is Y. A mass percentage content of the binder in the positive electrode film layer is X. It is satisfied: Y/X<53.

The positive electrode film layer in the present application includes the binder and the nickel-containing compound. The nickel-containing compound serves as a main positive electrode active material, and the increase of the nickel content is beneficial to improving the energy density of the battery. However, due to increase of internal conductivity and the increased probability of cation ($Li^{2-}/Ni^{3+}$) mixing during the charging and discharging process, the probability of battery failure also increases. "Failure" in the present application includes fire, explosion, etc. caused by factors such as short circuit. The binder in the positive electrode film layer can improve its binding ability with the current collector. For example, during a cutting process of positive and negative electrodes, a probability of overlap joint between a conductive layer and the negative electrode caused by a positive electrode active material falling off the current collector is reduced, and even the quantity of falling-off positive electrode active materials during the cutting process of the positive and negative electrodes is reduced.

In the present application, the molar percentage content of the nickel element in the nickel-containing compound is calculated based on the total molar amount of transition elements in the nickel-containing compound. For example, for NCM811, the molar percentage content of the nickel element is 80%. For another example, for $LiNiO_2$, the molar percentage content of the nickel element is 100%.

In the present application, the above relationship is satisfied between the selected content of the binder and the selected molar percentage content of the nickel element in the nickel-containing compound, under this relationship, the content of the binder and a content of the nickel-containing compound reasonably match, thereby increasing a resistance of a positive electrode diaphragm, and with increase of a resistance value, though overlap joint occurs to the positive and negative electrodes, the probability of battery failure can also be reduced. In summary, the electrode assembly designed in the present application can improve the safety of a lithium-ion battery on the premise of ensuring an energy density of the lithium-ion battery.

According to some embodiments of the present application, the molar percentage content Y of the nickel element and the mass percentage content X of the binder in the positive electrode film layer satisfy: $3 \leq Y/X < 53$.

In the present application, since electrode assemblies with different nickel-containing compounds have different requirements for safety, different safety requirements also have inconsistent requirements for the content and type of binders. At the same time, the type and content of the binders also affect other properties of the electrode assemblies, such as energy density. The present application controls: the molar percentage content Y of the nickel element and the mass percentage content X of the binder in the positive electrode film layer to satisfy: $3 \leq Y/X < 53$, so that not only can the energy density of the lithium-ion battery be ensured, but also the safety of the lithium-ion battery can be effectively improved.

**Positive electrode film layer**

According to some embodiments of the present application, the positive electrode film layer in the electrode assembly of the present application includes the nickel-containing compound. The molar percentage content Y of the nickel element in the nickel-containing compound satisfies: $30\% \leq Y \leq 100\%$.

In the present application, the nickel-containing compound serves as the main positive electrode active material, increase of the nickel content is conducive to improving the energy density of the battery, however, due to increase of internal conductivity and the increased probability of cation ($Li^{2+}/Ni^{3+}$) mixing during the charging and discharging process, the probability of battery failure also increases. Therefore, the present application mainly explores the safety of the electrode assembly while the molar percentage content of the nickel element is between 30% and 100%.

According to some embodiments of the present application, the nickel-containing compound in the positive electrode film layer includes one or a combination of two or more of a lithium nickel oxide, a lithium nickel cobalt oxide, a lithium nickel manganese oxide, a lithium nickel cobalt manganese oxide, a lithium nickel cobalt aluminum oxide, and modified compounds thereof.

The modified compounds in the present application include any modification conventional in the art, such as physical modification or chemical modification, etc., and the conventional modification in the art includes doping, etc.

In the present application, the lithium nickel oxide includes, but not limited to, $LiNiO_2$, the lithium nickel cobalt oxide includes, but not limited to, $LiNi_{0.8}Co_{0.2}O_2$, the lithium nickel manganese oxide includes, but not limited to, $LiNi_{0.5}Mn_{0.5}O_2$, the lithium nickel cobalt manganese oxide includes, but not limited to, $LiNi_xCo_yMn_zO_2$(x=0.3-0.92, y=0.03-0.4, z=0.05-0.4), specifically, for example, one or more of $LiN_{1/3}Co_{1/3}Mn_{1/3}O_2$(NCM333), $LiNi_{0.5}Co_{0.2}Mn_{0.3}O_2$ (NCM523), $LiNi_{0.6}Co_{0.2}Mn_{0.2}O_2$(NCM622), $LiNi_{0.8}Co_{0.1}Mn_{0.1}O_2$(NCM811), and $LiNi_{0.9}Co_{0.05}Mn_{0.05}O_2$, and the lithium nickel cobalt aluminum oxide includes, but not limited to, at least one of $LiNi_xCo_yAl_zO_2$(x=0.3-0.92, y=0.03-0.4, z=0.05-0.4):$LiNi_{1/3}Co_{1/3}Al_{1/3}O_2$(NCA333), $LiNi_{0.5}Co_{0.2}Al_{0.3}O_2$(NCA523), $LiNi_{0.6}Co_{0.2}Al_{0.2}O_2$(NCA622), $LiNi_{0.8}Co_{0.1}A$-

$_{0.1}O_2$(NCA811), or $LiNi_{0.9}Co_{0.05}Al_{0.05}O_2$.

In the present application, the nickel-containing compound serves as the main positive electrode active material, and the increase of the nickel content is conducive to improving the energy density of the battery. However, increase of the nickel content also brings the advantage of increased electrode conductivity and the probability of overlap joint and short-circuiting occurring to the positive and negative electrodes during the cutting process of the positive and negative electrodes. The present application comprehensively considers various factors and makes reasonable optimization and selection for the types of nickel-containing compounds.

According to some embodiments of the present application, the mass percentage content X of the binder in the positive electrode film layer satisfies: $1\% \leq X \leq 10\%$. In some embodiments of the present application, the mass percentage content X of the binder in the positive electrode film layer may be any one of 1%, 2%, 3%, 4%, 4.5%, 5%, 6%, 7%, 8%, 9%, and 10%, or any range or any specific numerical value satisfying range values.

Meanwhile, in some embodiments of the present application, the binder includes a fluoropolymer, and the fluoropolymer includes one or a combination of two or more of polyvinylidene fluoride, vinylidene fluoride-tetrafluoroethylene-propylene terpolymer, vinylidene fluoride-hexafluoropropylene-tetrafluoroethylene terpolymer, and fluorine-containing acrylate resin.

In the present application, the fluoropolymer is selected as the binder. The fluoropolymer is beneficial to improving the binding ability between the fluoropolymer and the current collector. On the other hand, the conductivity of the fluoropolymer is correlated with its content. The present application focuses on the effect of polyvinylidene fluoride on a resistance of the positive electrode film layer when the fluoropolymer is polyvinylidene fluoride. For example, by combining a certain amount of polyvinylidene fluoride with a specific type of nickel-containing compound, a resistance of an electrode plate may be increased and thus a resistance when a short circuit occurs due to overlap joint may be increased to reduce the probability of failure. Meanwhile, one or two or more of vinylidene fluoride-tetrafluoroethylene-propylene terpolymer, vinylidene fluoride-hexafluoropropylene-tetrafluoroethylene terpolymer, and fluorine-containing acrylate resin can also satisfy the requirements of the present application for the fluoropolymer.

The present application selects a reasonable type of nickel-containing compound and combines it with the use amount of the binder to appropriately increase the resistance of the positive electrode film layer so as to improve the short-circuit resistance of occurrence of overlap joint during the cutting process of the positive and negative electrodes.

According to some embodiments of the present application, the positive electrode film layer satisfies any one of the following:

(1.1) in a case that the molar percentage content of the nickel element in the nickel-containing compound is $80\% \leq Y \leq 100\%$, it is satisfied: $8 \leq Y/X \leq 40$;
(1.2) in a case that the molar percentage content of the nickel element in the nickel-containing compound is $50\% < Y < 80\%$, $5 < Y/X < 53$; and
(1.3) in a case that the molar percentage content of the nickel element in the nickel-containing compound is $30\% \leq Y \leq 50\%$, $3 \leq Y/X \leq 50$.

In the present application, different nickel-containing compounds have different effects on the resistance value of the positive electrode film layer, so the requirements for the content of the binder are also different. The present application divides the molar percentage content of the nickel element in a change interval from high to low into three levels, and each level corresponds to a different Y/X ratio interval. In combination with the molar percentage content of the nickel element in the nickel-containing compound and according to an appropriate Y/X ratio, an appropriate content of the binder may be selected, the content of the binder and the molar percentage content of the nickel element in the nickel-containing compound match, thereby increasing a resistance of a positive electrode diaphragm, and ultimately increasing a resistance when a short circuit occurs due to overlap joint so as to reduce a probability of battery failure.

According to some embodiments of the present application, the positive electrode film layer satisfies any one of the following:

(2.1) in a case that the molar percentage content of the nickel element in the nickel-containing compound is $80\% \leq Y \leq 100\%$, the mass percentage content of the binder in the positive electrode film layer satisfies: $2.5\% \leq X \leq 10\%$;
(2.2) in a case that the molar percentage content of the nickel element in the nickel-containing compound is $50\% < Y < 80\%$, the mass percentage content of the binder in the positive electrode film layer satisfies: $1.5\% \leq X \leq 10\%$; and
(2.3) in a case that the molar percentage content of the nickel element in the nickel-containing compound is $30\% \leq Y \leq 50\%$, the mass percentage content of the binder in the positive electrode film layer satisfies: $1\% \leq X \leq 10\%$.

In the present application, the use amount of the binder is limited for two main purposes: 1. increasing a diaphragm resistance of the positive electrode plate; and 2. enhancing the adhesion between the positive electrode active material and other materials. Because different materials have different particle sizes, thermal stability has a remarkable difference. Therefore, in order to achieve the purpose of high resistance and high adhesion, the use content of the binder is different. A study is conducted by using PVDF-type binders as additives for the positive electrode plate.

There is a difference in the powder resistivity of different positive electrode active materials. For example, in an NCM system, the higher the Ni content, the lower the short-circuit resistance. Therefore, in order to improve the short-circuit resistance, it is necessary to increase the content of a non-conductive binder in the positive electrode plate, thereby increasing the failure short-circuit resistance when overlap joint occurs.

In the present application, different nickel-containing compounds have different effects on the resistance value of the positive electrode film layer, so the requirements for the binder are also different. The present application selects a suitable type of nickel-containing compound and a suitable content of binder to match so as to increase the resistance of the electrode plate and thus increase the resistance when a short circuit occurs due to overlap joint, thereby reducing the probability of failure.

According to some embodiments of the present application, based on a total weight of the positive electrode film layer, the sum of a mass of the fluoropolymer and a mass of the nickel-containing compound is 90% or above.

According to some embodiments of the present application, the positive electrode film layer further includes a conductive agent and a dispersing agent. The conductive agent includes, but not limited to, one or a combination of two or more of graphite, superconducting carbon, carbon black (acetylene black, Ketjen Black, Super P, etc.), carbon dots, carbon nanotubes, graphene, and carbon nanofibers. The dispersing agent includes cellulose and salts thereof, specifically including, but not limited to, methyl cellulose, carboxymethyl cellulose, hydroxyethyl cellulose, sodium carboxymethyl cellulose, lithium carboxymethyl cellulose and the like.

**Negative electrode film layer**

According to some embodiments of the present application, the negative electrode film layer in the negative electrode plate includes a negative electrode active material, a binder, a conductive agent and a dispersing agent, etc. The negative electrode active material includes a carbonaceous material, and the carbonaceous material includes one or a combination of two or more of artificial graphite, natural graphite, soft carbon and hard carbon. The artificial graphite, natural graphite, soft carbon, hard carbon, etc. include any form of materials conventional in the art, and include any manufacturers and models conventional in the art. Meanwhile, the negative electrode active material may also include a silicon-based material, and the silicon-based material includes one or two of a silicon oxide material or a silicon carbide material. In addition, the negative electrode active material may also include a silicon-carbon composite, a Li-Sn alloy, a Li-Sn-O alloy, Sn, SnO, $SnO_2$, $TiO_2$-$Li_4Ti_5O_{12}$, and a Li-Al alloy. However, the present application is not limited to these materials, and other conventional materials used as negative electrode active materials for the lithium-ion battery may also be used. One of these negative electrode active materials may be used alone, or two or more of them may be used in combination. The types of the binder, conductive agent and dispersing agent in the negative electrode plate may be the same as those in the positive electrode plate.

**Current collector**

In some embodiments of the present application, in the electrode assembly provided by the present application, the positive electrode plate includes the positive electrode current collector and the positive electrode film layer arranged on at least one side surface of the positive electrode current collector. The negative electrode plate includes a negative electrode current collector and a positive electrode film layer arranged on at least one side surface of the positive electrode current collector. The positive electrode current collector and/or the negative electrode current collector is a composite current collector, and the composite current collector includes a support layer and a conductive layer arranged on at least one side surface of the support layer; the positive electrode film layer is arranged on one side surface of the conductive layer facing away from the support layer, and a thickness of the support layer is not less than a thickness of the conductive layer.

"And/or" in the present application includes that at least one of the positive electrode current collector and the negative electrode current collector is a composite current collector, and "composite" includes that the current collector has a structure of two or more layers, and the layers are formed together by any conventional composite method in the art, such as binding, coating, deposition, etc. The thermal conductivity of the composite current collector is worse than that of conventional metal current collectors, such as aluminum foil and copper foil. When cutting the composite current collector, the number of burrs generated during the cutting process of the positive and negative electrodes can be reduced, thereby reducing the short circuit area, which is beneficial to improving the safety of the electrode assembly.

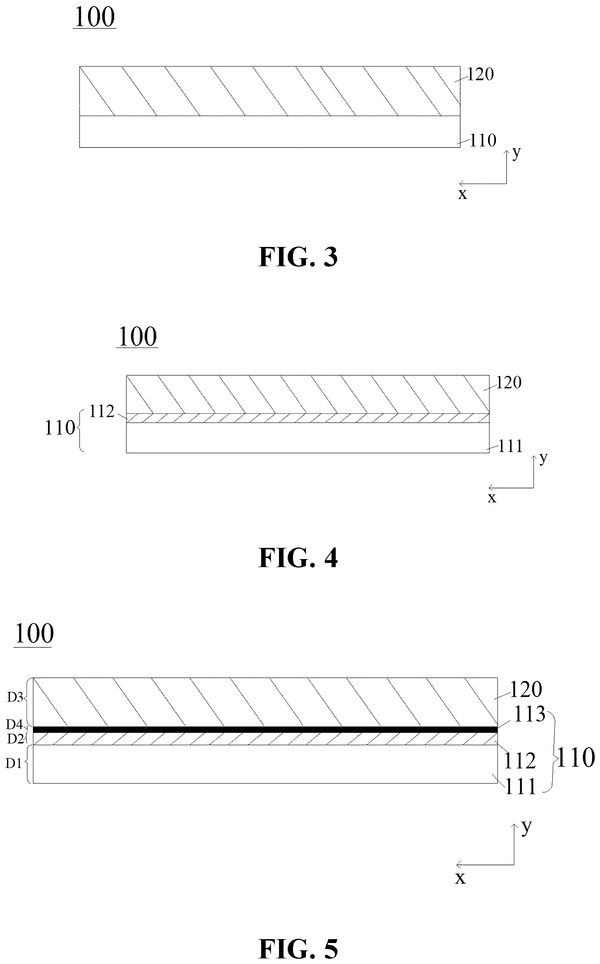

According to some embodiments of the present application, the present application provides an electrode assembly. The electrode assembly includes a positive electrode plate, a negative electrode plate and a separator. As shown in FIG. 3, the positive electrode plate 100 includes a positive electrode current collector 110 and a positive electrode film layer 120 arranged on at least one side surface of the positive electrode current collector 110. "At least one side surface" includes one side surface, two side surfaces and more side surfaces. FIG. 3 of the present application shows a schematic diagram of one side. As shown in FIG. 4 , the positive electrode current collector 110 includes a first support layer 111 and a first conductive layer 112 arranged on at least one side surface of the first support layer 111 . Similarly, "at least one side surface" includes one side surface, two side surfaces, and more side surfaces. FIG. 4 of the present application shows a schematic diagram of one side. In addition, the positive electrode film layer 120 is located on one side surface of the first conductive layer 112 facing away from the first support layer 111.

According to some embodiments of the present application, as shown in FIG. 5 , the positive electrode current collector 110 further includes a first protective layer 113, and the first protective layer 113 is located on one side surface of the first conductive layer 112.

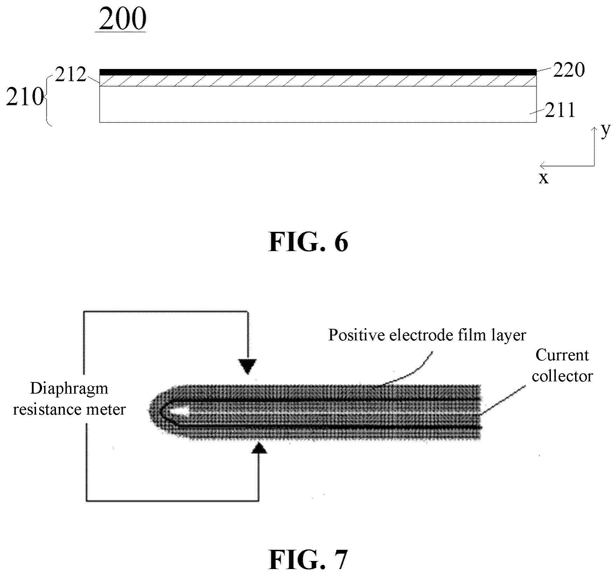

As shown in FIG. 6, the negative electrode plate 200 includes a negative electrode current collector 210 and a negative electrode film layer 220. The negative electrode current collector 210 includes a second support layer 211 and a second conductive layer 212 arranged on at least one side surface of the second support layer 211. Similarly, "at least one side surface" includes one side surface, two side surfaces, and more side surfaces. FIG. 6 of the present application shows a schematic diagram of one side. At the same time, the negative electrode current collector 210 may further include a second protective layer, and the second protective layer is located on one side surface of the second conductive layer, which is not directly shown in the drawings of the present application.

The thickness of each layer of the composite current collector in the present application is a distance between one end face and the other opposite end face of each layer in a thickness direction (a coordinate axis y direction in FIG. 3 to FIG. 6) of the current collector. A specific value of the thickness may be obtained by measurement, such as measuring front-back thicknesses by using a micrometer and then calculating the difference. It may also be obtained by taking pictures of slice samples in the thickness direction of the current collector using a scanning electron microscope and measuring an image obtained by the scanning electron microscope.

The support layer in the composite current collector in the present application may play a supporting role as a current collector body, which is beneficial to ensuring the overall strength of the composite current collector. The support layer may be of a single-layer structure or a composite layer structure having two or more layers. The support layer includes an organic support layer, and the organic support layer adopts an organic material, which reduces a thermal conductivity coefficient of the composite current collector.

The conductive layer in the present application is used to achieve the purpose of conducting electricity and collecting current.

The thickness of the support layer in the present application is not less than a thickness of the conductive layer. The support layer is configured to provide effective support for the conductive layer. The composite current collector formed by the support layer and the conductive layer can reduce the number of burrs generated during the cutting process of the positive and negative electrodes compared to conventional metal current collectors, thereby reducing the short circuit area.

According to some embodiments of the present application, the positive electrode current collector is a composite current collector, and the negative electrode current collector is a conventional metal foil. Compared with a conventional secondary battery in which the positive electrode current collector is also a metal foil, the safety is improved.

According to some embodiments of the present application, both the positive electrode current collector and the negative electrode current collector are composite current collectors. The safety of the secondary battery is further improved.

According to some embodiments of the present application, the thickness of the support layer is greater than that of the conventional metal current collector, such as an aluminum foil and a copper foil, which can effectively reduce the probability of overlap joint and short-circuiting during the cutting process of the positive and negative electrodes.

According to some embodiments of the present application, the thickness of the support layer and the molar percentage content of the nickel element in the nickel-containing compound satisfy a certain mathematical relationship, for example:

$$D1 \geq Y \times 10 + 2; \text{ Formula (X)};$$

where D1 is the thickness of the support layer and has a unit of $\mu$m; and
Y is the molar percentage content % of the nickel element in the nickel-containing compound.

The thickness D1 of the support layer of the present application is shown in FIG. 5. The present application may select a lower limit value of the thickness of the support layer according to the molar percentage content of the nickel element in the nickel-containing compound. Above this lower limit value, the probability of overlap joint and short-circuiting during the cutting process of the positive and negative electrodes can be effectively reduced.

According to some embodiments of the present application, the present application mainly discusses the specific value of the thickness of the support layer of the positive electrode film layer in these embodiments. Similarly, a thickness of the support layer of the negative electrode film layer also satisfies the relationship and value.

According to some embodiments of the present application, the thickness of the support layer satisfies: 2 $\mu$m$\leq$D1$\leq$30 $\mu$m.

According to some embodiments of the present application, the thickness of the support layer satisfies: 5 $\mu$m$\leq$D1$\leq$20 $\mu$m.

According to some embodiments of the present application, the thickness of the conductive layer is less than that of the conventional metal current collector, such as the aluminum foil and the copper foil, which can effectively reduce the number of burrs generated during the cutting process of the positive and negative electrodes, and thus reduce the short circuit area.

According to some embodiments of the present application, the thickness of the conductive layer is D2, satisfying: D2$\leq$3 $\mu$m.

The thickness D2 of the conductive layer of the present application is shown in FIG. 5.

According to some embodiments of the present application, the thickness D2 of the conductive layer satisfies: 30 nm$\leq$D2$\leq$3 $\mu$m.

In the present application, the thickness of the conductive layer may be any one of 30 nm, 50 nm, 80 nm, 100 nm, 200 nm, 500 nm, 1 $\mu$m, 2 $\mu$m, and 3 $\mu$m, or any range or any specific value in the range value. The thickness of the conductive layer within the range value can reduce the number of burrs generated during the cutting process of the positive and negative electrodes, thereby reducing the short circuit area.

According to some embodiments of the present application, the thickness of the support layer is not greater than the thickness of the positive electrode film layer. The present application focuses on the study that in the positive electrode current collector, the thickness of the first support layer is not greater than the thickness of the positive electrode film layer. In the present application, the thickness of the first support layer is selected to be no greater than the thickness of the positive electrode film layer. On the premise of ensuring that the first support layer plays a supporting role, the normal operation of the positive electrode film layer is not affected. At the same time, it is beneficial to improving the battery safety and energy density.

According to some embodiments of the present application, the thickness of the first support layer (support layer) is D1, and the thickness of the positive electrode film layer is D3, which satisfy: 1$\leq$D3/D1$\leq$300 Formula (XI).

The thickness D3 of the positive electrode film layer in the present application is shown in FIG. 5.

The present application specifically limits the relationship between the thickness of the first support layer and the thickness of the positive electrode film layer, and under this relationship, it does not affect normal operation of the positive electrode film layer and is conducive to improving battery safety and energy density.

According to some embodiments of the present application, the thickness D1 of the first support layer satisfies: 2 $\mu$m$\leq$D1$\leq$30 $\mu$m.

According to some embodiments of the present application, the thickness D1 of the first support layer satisfies: 5 $\mu$m$\leq$D1$\leq$20 $\mu$m.

In the present application, the thickness of the first support layer may be any one of 2 $\mu$m, 5 $\mu$m, 8 $\mu$m, 10 $\mu$m, 15 $\mu$m, 20 $\mu$m, and 30 $\mu$m, or any range or any specific value in the range value. The thickness of the support layer within the range value can effectively reduce the probability of overlap joint and short-circuiting during the cutting process of the positive and negative electrode.

In the present application, the thickness of the second support layer also satisfies a range from 2 $\mu$m to 30 $\mu$m, for example, the thickness of the second support layer is equal to the thickness of the first support layer.

According to some embodiments of the present application, the thickness D3 of the positive electrode film layer satisfies: 10 $\mu$m$\leq$D3$\leq$300 $\mu$m.

According to some embodiments of the present application, the thickness D3 of the positive electrode film layer satisfies: 80 $\mu$m$\leq$D3$\leq$200 $\mu$m.

In the present application, the thickness of the positive electrode film layer may be any one of 10 $\mu$m, 20 $\mu$m, 30 $\mu$m, 50 $\mu$m, 80 $\mu$m, 100 $\mu$m, 200 $\mu$m, and 300 $\mu$m, or any range or any specific value in the range value. The positive electrode film layer within the range value is conducive to improving battery safety and energy density.

According to some embodiments of the present application, the positive electrode current collector further includes a first protective layer, and the first protective layer is located between the positive electrode film layer and the conductive layer, and the thickness of the first protective layer is D4.

The thickness D4 of the first protective layer in the present application is shown in FIG. 5.

In the present application, the first protective layer can reduce the degree of damage to the conductive layer during the cutting process and further reduce the short circuit area.

According to some embodiments of the present application, the thickness D4 of the first protective layer and the thickness D2 of the conductive layer satisfy: D4$\leq$0.1$\times$D2Formula (XII).

The thickness of the first protective layer in the present application satisfies the relation formula, which is conducive to protecting the conductive layer.

According to some embodiments of the present application, the thickness D4 of the first protective layer satisfies: 1 nm≤D4≤200 nm.

According to some embodiments of the present application, the thickness D4 of the first protective layer satisfies: 20 nm≤D4≤150 nm.

In the present application, the thickness of the first protective layer may be any one of 1 nm, 5 nm, 10 nm, 20 nm, 50 nm, 100 nm, 150 nm, and 200 nm, or any range or any specific value in the range value. The thickness of the first protective layer within the range value is conducive to protecting the conductive layer.

In the present application, the negative electrode current collector may also include a second protective layer, and a thickness of the second protective layer also satisfies a range from 1 nm to 200 nm, for example, the thickness of the second protective layer is equal to the thickness of the first protective layer.

The support layer in the composite current collector in the present application may play a supporting role as a current collector body, which is beneficial to ensuring the overall strength of the composite current collector. The support layer may be of a single-layer structure or a composite layer structure having two or more layers. The support layer includes an organic support layer, and the organic support layer adopts an organic material, which reduces a thermal conductivity coefficient of the composite current collector. A material of the organic support layer includes one or two of a high molecular material and a high molecular based composite material. The high molecular material includes one or more of polyamide, polyimide, polyethylene terephthalate, polybutylene terephthalate, polyethylene naphthalate, polycarbonate, polyethylene, polypropene, polypropylene, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyformaldehyde, polyphenyl ether, polyphenylene sulfide, polyethylene glycol, polysulfur nitrides, polyphenyl, polypyrrole, polyaniline, polythiophene, polypyridine, cellulose, starch, protein, epoxy resin, phenolic resin, their derivatives, their crosslinkers, and their copolymers. The high molecular based composite material includes the above high molecular material and an additive. The additive includes one or more of a metal material and an inorganic non-metal material. The metal material includes one or more of aluminum, an aluminum alloy, copper, a copper alloy, nickel, a nickel alloy, titanium, a titanium alloy, iron, an iron alloy, silver, and a silver alloy. The inorganic non-metal material includes one or more of a carbon-based material, aluminum oxide, silicon dioxide, silicon nitride, silicon carbide, boron nitride, silicate, iron oxide, a glass material, a ceramic material, and a ceramic composite material. The carbon-based material includes one or more of graphite, superconducting carbon, acetylene black, carbon black, Ketjen black, carbon dots, carbon nanotubes, graphene, and carbon nanofibers. The additive may also be a carbon-based material coated with a metal material, such as one or more of nickel-coated graphite powder and nickel-coated carbon fiber.

The conductive layer in the present application is used to achieve the purpose of conducting electricity and collecting current. The conductive layer includes one or more of a metal material, a carbon-based conductive material and a conductive high molecular material. The metal material may include one or more of aluminum, an aluminum alloy, copper, a copper alloy, nickel, a nickel alloy, iron, an iron alloy, titanium, a titanium alloy, silver, and a silver alloy. The carbon-based conductive material includes one or more of graphite, superconducting carbon, acetylene black, carbon black, Ketjen black, carbon dots, carbon nanotubes, graphene, and carbon nanofibers. The conductive high molecular material includes one or more of polysulfur nitrides, aliphatic conjugated polymer, aromatic ring conjugated polymer and aromatic heterocyclic conjugated polymer. As an example, the conductive high molecular material may include one or more of polyacetylene, polyphenyl, polypyrrole, polyacetylene, polyphenyl adhesive, polythiophene and polypyridine. In addition, doping can also increase the electron delocalization of the conductive high molecular material and improve conductivity.

In the present application, the protective layer is mainly used to reduce the probability of chemical corrosion or mechanical damage to the conductive layer. The protective layer includes one or more of metal, metal oxide and conductive carbon. The metal is, for example, one or more of nickel, chromium, nickel-based alloy and copper-based alloy. The aforementioned nickel-based alloy is an alloy composed of pure nickel as a matrix and one or more other elements added thereto, and is preferably a nickel-chromium alloy. The nickel-chromium alloy is an alloy formed by metallic nickel and metallic chromium. Optionally, a weight ratio of nickel to chromium in the nickel-chromium alloy is 1:99 to 99:1, such as 9:1. The aforementioned copper-based alloy is an alloy composed of pure copper as a matrix and one or more other elements added thereto, and is preferably a nickel-copper alloy. Optionally, a weight ratio of nickel to copper in the nickel-copper alloy is 1:99 to 99:1, such as 9:1. The above metal oxide is, for example, one or more of aluminum oxide, cobalt oxide, chromium oxide, and nickel oxide. The above conductive carbon is, for example, one or more of graphite, superconducting carbon, acetylene black, carbon black, Ketjen black, carbon dots, carbon nanotubes, graphene, and carbon nanofibers, and further, is one or more of carbon black, carbon nanotubes and graphene.

**Separator**

According to some embodiments of the present application, since heat is generated during the cutting process of the positive and negative electrodes, this part of the heat will affect the shrinkage of the separator. If a shrinkage rate of the separator is affected to a small extent, the positive and negative electrode short-circuit overlap joint area caused by the shrinkage of the separator during the cutting process can be reduced. Since heat is related to the positive electrode active material, the present application establishes a mathematical relationship between the shrinkage rate of the separator and the molar percentage content of the nickel element in the nickel-containing compound:

MD shrinkage rate and/or TD shrinkage rate $\leq (13-Y\times 10)/100$; Formula (XIII);
The shrinkage rate of the separator in 130°C includes an MD shrinkage rate and a TD shrinkage rate;
Y is the molar percentage content % of the nickel element in the nickel-containing compound;
the MD shrinkage rate is a heat shrinkage rate measured in a machine direction of the separator; and
the TD shrinkage rate is a heat shrinkage rate measured in a transverse direction of the separator.

The shrinkage rate of the separator in the present application in 130°C may be obtained by direct measurement and calculation.

The separator in the present application is beneficial to reducing its shrinkage rate after heating, by reducing the positive and negative electrode short-circuit overlap joint area caused by the shrinkage of the separator during the cutting process.

According to some embodiments of the present application, the separator includes a base membrane and a coating arranged on at least one side surface of the base membrane.

According to some embodiments of the present application, the base membrane includes, but not limited to, one of a polyethylene membrane, a polypropene membrane, a polypropene/polyethylene/polypropene composite membrane, a polyvinylidene fluoride membrane, a polyethylene/polyvinylidene fluoride composite membrane, a polypropene/polyvinylidene fluoride composite membrane, an aramid membrane and a polyimide membrane.

According to some embodiments of the present application, a thickness of the base membrane may be 3 $\mu$m to 16 $\mu$m, for example, any one of 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, and 16 $\mu$m, or any range or any specific value in the range value.

According to some embodiments of the present application, the coating includes an organic polymer fiber resistant to high temperature, and the organic polymer fiber includes one or more of an aramid fiber, a polyacrylonitrile fiber, a polyimide fiber, a polycarbonate fiber, a polyphenylene sulfide fiber, a polyetheretherketone fiber, a polysulfone fiber, and a polyarylate fiber.

According to some embodiments of the present application, a thickness of the coating is 1 $\mu$m to 10 $\mu$m, for example, any one of 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, and 10$\mu$m, or any range or any specific value in the range value.

According to some embodiments of the present application, the shrinkage rate of the separator in a transverse direction (TD) in 130°C is $\leq 8\%$.

According to some embodiments of the present application, the shrinkage rate of the separator in a machine direction (MD) in 130°C is $\leq 8\%$.

The separator in the present application can reduce the probability of occurrence of short circuit between the positive and negative electrodes when sawed-off. Even if a short circuit occurs, the heat generated inside will not cause serious shrinkage and damage to the separator, thereby reducing the further increase of the short circuit area.

According to some embodiments of the present application, a puncturing-proof strength of the separator is $\geq 400$ gf.

The separator in the present application has a certain puncturing-proof strength, which can effectively avoid the probability of burrs puncturing the separator during the cutting process and causing overlap joint of the positive and negative electrodes.

**Electrolyte**

The electrolyte plays a role in conducting ions between the positive electrode plate and negative electrode plate. The type of the electrolyte is not specifically limited in the present application and can be selected according to requirements. For example, the electrolyte may be in a liquid state, a gel state or an all solid state. The electrolyte solution includes an electrolyte salt and a solvent. The electrolyte salt may be selected from one or more of lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluor-

ophosphate ($LiPO_2F_2$), lithium difluoro bis(oxalato)phosphate (LiDFOP), and lithium tetrafluoro(oxalato)phosphate (LiTFOP). A concentration of the electrolyte salt is generally in a range from 0.5 mol/L to 5 mol/L. The solvent may be one or more selected from fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS) and ethylsulfonylethane (ESE). The electrolyte solution further optionally includes an additive. For example, the additive may include a negative electrode film-forming additive and a positive electrode film-forming additive and may further include an additive that can improve certain performance of the battery, e.g., an additive that improves the overcharging performance of the battery, an additive that improves the high-temperature performance or low-temperature performance of the battery, and the like.

### Preparation of current collector

Aluminum is deposited on one surface of the support layer (polycarbonate) to form a conductive layer, and a nickel-chromium alloy is deposited on a surface of the conductive layer to form a protective layer. The thickness D4 of the protective layer and the thickness D2 of the conductive layer satisfy: $D4 \leq 0.1 \times D2$.

In the embodiment of the present application, the thickness of the conductive layer is $\leq 3 \mu m$, and the thickness of the protective layer is $1 nm \leq D4 \leq 200 nm$.

In the specific embodiments of the present application, a value of the thickness of the protective layer satisfies the above relationship and range value.

The prepared current collector is used for both positive electrode current collector and negative electrode current collector.

### Preparation of positive electrode plate

The nickel-containing compound, the binder (polyvinylidene fluoride), the conductive agent (superconducting carbon) and the dispersing agent (carboxymethyl cellulose) are mixed according to a mass ratio of (99-x):x:0.8:0.2; the solvent (N-methylpyrrolidone (NMP)) is added; the mixture is stirred under the action of a vacuum stirrer to be stable and uniform to obtain a positive electrode slurry; the positive electrode slurry is evenly applied to a positive electrode current collector (an aluminum foil) with an applying weight of 0.275 $g/1540mm^2$; and after drying, cold pressing and cutting, a conventional positive electrode plate is obtained. The positive electrode plate has a compacted density of 3.5 $g/cm^3$, and the positive electrode film layer in the positive electrode plate has a thickness of 125 $\mu m$.

### Preparation of negative electrode plate

The negative electrode active material (graphite), the conductive agent (acetylene black), a thickener (CMC), and the binder (SBR) are mixed according to a mass ratio of 97:1:1:1; the solvent (deionized water) is added; the mixture is stirred under the action of a vacuum stirrer to be stable and uniform to obtain a negative electrode slurry; the negative electrode slurry is uniformly applied to the negative electrode current collector; and after drying and cold pressing, a conventional negative electrode plate is obtained. The negative electrode plate has a compacted density of 1.7 $g/cm^3$.

### Preparation of separator

The coating is applied to two side surfaces of the polyethylene membrane, and by adjusting the thickness of the polyethylene membrane and the coating as well as the type of the coating, the separator is selected to satisfy the following requirements:

the shrinkage rate of the separator in the transverse direction (TD) in 130°C is $\leq 8\%$;
the shrinkage rate of the separator in the machine direction (MD) in 130°C is $\leq 8\%$; and
the puncturing-proof strength of the separator is $\geq 400$ gf.

### Preparation of electrolyte solution

Lithium hexafluorophosphate electrolyte salt is added to a mixture of ethylene carbonate and ethyl methyl carbonate in a volume ratio of 5:5 at a concentration of 2 mol/L.

**Preparation of lithium-ion secondary battery**

The positive electrode plate, the negative electrode plate, and the separator are wound to obtain a cell, the cell is put in a packaging housing, then the electrolyte solution is injected, sealing is performed, and after standing, compacting, formation and air exhausting and other procedures, the lithium-ion secondary battery is obtained.

Embodiments 1 to 5 are the current collector, the positive electrode film layer and the separator obtained according to the above preparation method.

**Test conditions:**

(1) Determination of a resistance of positive electrode film layer:

Under 5% humidity and room temperature environment, a 100mm×100mm positive electrode plate soaked in the above electrolyte is obtained, folded in a middle (here, an electrode plate coated on both sides to form the positive electrode film layer is taken as an example, and for an electrode plate coated on one side, the positive electrode film layer is folded outward) and placed in a middle of a probe of a diaphragm resistance meter (as shown in FIG. 7), and then test is performed to obtain the resistance of the positive electrode film layer of the tested electrode plate. After testing 5 samples, an average value is obtained, which is the resistance of the positive electrode film layer.

(2) Test for MD shrinkage rate and TD shrinkage rate of separator:

A separator with suitable length and width is obtained and made to be a sample; then the sample is put on a stainless steel plate in a blast-type constant temperature oven; the stainless steel plate is located in a middle of the constant temperature oven and heated for 1 h in a heating temperature is 90°C, and then the sample is taken out; and the sample is cooled to a test environment temperature, a size of the sample is measured, and the shrinkage rate of the separator is calculated according to the following formula,

$$T=(L1-L2)/L2\times100\%.$$

where T is the thermal shrinkage rate % of the separator; L1 is the length before heating and has a unit of mm; L2 is the length after heating and has a unit of mm.

The thermal shrinkage rate measured in the transverse direction of the separator sample is the TD shrinkage rate, and the thermal shrinkage rate measured in the machine direction of the separator sample is the MD shrinkage rate.

(3) Test for puncturing-proof strength of separator:

An electronic universal testing machine is adopted. A utility knife is used to cut the separator into strips, where a width of the strip separator has to be greater than 100 mm. A test piece with a width of 100 mm is mounted on a sample membrane fixing clamp ring, then a steel needle with a diameter of 1.0 mm and a radius of 0.5 mm at the diameter top is used to puncture the test piece with the width of 100 mm at a speed of (50±5) mm/min, and a maximum load of the steel needle penetrating the test piece is read. Three or more points of the same test piece are selected for testing, five or more test pieces of the same separator are selected for measurement, and an arithmetic mean of a plurality of data collected from the test of the same separator is taken as the puncturing-proof strength of the separator. The puncturing-proof strength of the separator used in the embodiment of the present application satisfies ≥400 gf.

(4) Cutting test for secondary battery:

The secondary battery is charged at 0.33C current in 25°C to an upper-limit cut-off voltage, and then fixed with a clamping device, a cutting machine is started to perform straight-line cutting in a length (width) direction or height direction until it is cut off, a cut-off position cannot be at a pole position, and whether there is smoke, fire, explosion, etc. is observed during the cutting process. The cutting test of the present application is not limited by the model of the clamping device or the cutting machine. The present application hopes to evaluate the safety of the electrode assembly of the present application through a rigorous cutting test.

The design principles of the present application are shown in Table 1.

**Table 1 List of design principles**

| Nickel-containing compound | Y/X | PVDF content | Thickness (μm) of support layer | Thickness (μm) of conductive layer | 130°C MD shrinkage rate of separator | 130°C TD shrinkage rate of separator | Sawing-off result |
|---|---|---|---|---|---|---|---|
| $LiNiO_2$ | 10 to 30 | ≥3.3% | ≥12 | ≤3 | ≤3% | ≤3% | Pass |
| In $LiNi_xCo_yMn_zO_2$ ternary system, 8≤x<10 | 8 to 40 | ≥2.5% | ≥10 | ≤3 | ≤4% | ≤3% | Pass |
| In $LiNi_xCo_yMn_zO2$ ternary system, 5<x<8 | 5 to 53 | ≥1.5% | ≥7 | ≤3 | ≤8% | ≤8% | Pass |
| In $LiNi_xCo_yMn_zO2$ ternary system, x≤5 | 3 to 50 | ≥1% | ≥6 | ≤3 | ≤8% | ≤8% | Pass |

In the ternary system of Table 1, when "5<x<8", 5<Y/X<53 is satisfied; and "pass" in Table 1 means that there is no fire, no smoke and no explosion during the sawing-off process.

Table 1 shows that the listed conditions are met at the same time, and the cell does not catch fire, smoke or explode during the sawing-off process.

The specific embodiment is shown in Table 2;

## Table 2 List of Examples and Comparative Examples

| | Positive electrode current collector | | | Positive electrode film layer | | | | |
|---|---|---|---|---|---|---|---|---|
| | Thickness of support layer ($\mu$m) | Thickness of conductive layer ($\mu$m) | Thickness (nm) of protective layer | Nickel-containing compound | Y/X | Content (wt%) of fluoropolymer | Thickness ($\mu$m) | Diaphragm resistance (m$\Omega$) |
| Example 1-1 | 12 | 2 | 20 | $LiNiO_2$ | 30 | 3.3 | 125 | 5.56 |
| Example 1-2 | 30 | 3 | 150 | $LiNiO_2$ | 10 | 10 | 125 | 5.02 |
| Example 2-1 | 11 | 2 | 100 | NCM9 | 18 | 5 | 125 | 4.98 |
| Example 2-2 | 12 | 2 | 100 | NCM9 | 18 | 5 | 125 | 4.30 |
| Example 2-3 | 16 | 2 | 100 | NCM9 | 18 | 5 | 125 | 4.71 |
| Example 2-4 | 18 | 2 | 100 | NCM9 | 18 | 5 | 125 | 5.05 |
| Example 2-5 | 20 | 2 | 100 | NCM9 | 18 | 5 | 125 | 5.14 |
| Example 2-6 | 16 | 0.03 | 20 | NCM9 | 20 | 4.5 | 125 | 5.10 |
| Example 2-7 | 16 | 2 | 20 | NCM9 | 36 | 2.5 | 125 | 4.00 |
| Example 2-8 | 30 | 3 | 200 | NCM9 | 36 | 2.5 | 125 | 4.75 |
| **Example 2-9** | 8 | 2 | 100 | NCM9 | 18 | 5 | 125 | 3.77 |
| **Example 2-10** | 16 | 4 | 100 | NCM9 | 18 | 5 | 125 | 3.70 |
| **Example 2-11** | 11 | 2 | 100 | NCM9 | 18 | 5 | 125 | 3.45 |
| **Comparative example 2-1** | 11 | 2 | 100 | NCM9 | 41 | 2.2 | 125 | 3.45 |
| **Comparative example 2-2** | 8 | 4 | 100 | NCM9 | 41 | 2.2 | 125 | 3.00 |
| Example 3-1 | 10 | 2 | 80 | NCM811 | 32 | 2.5 | 125 | 1.81 |
| Example 3-2 | 10 | 2 | 80 | NCM811 | 8 | 10 | 125 | 2.05 |
| Example 4-1 | 8 | 2 | 60 | NCM622 | 40 | 1.5 | 125 | 0.75 |
| Example 4-2 | 8 | 2 | 60 | NCM622 | 6 | 10 | 125 | 1.65 |
| Example 4-3 | 8 | 2 | 60 | NCM622 | 40 | 1.5 | 125 | 0.6 |
| **Comparative example 4-1** | 6 | 4 | 60 | NCM622 | 60 | 1.0 | 125 | 0.5 |
| Example 5-1 | 7 | 2 | 40 | NCM523 | 50 | 1.0 | 125 | 0.4 |
| Example 5-2 | 7 | 2 | 40 | NCM523 | 5 | 10 | 125 | 0.35 |
| Example 5-3 | 5 | 2 | 40 | NCM523 | 33 | 1.5 | 125 | 0.34 |
| **Comparative example 5-1** | 6 | 2 | 40 | NCM523 | 52 | 0.09 | 125 | 0.33 |

| | Separator | | Phenomenon during cutting-off process |
|---|---|---|---|
| | 130°C MD shrinkage rate % of separator | 130°C TD shrinkage rate % of separator | |
| Example 1-1 | 3 | 3 | Pass |
| Example 1-2 | 3 | 3 | Pass |
| Example 2-1 | 4 | 3 | Pass |
| Example 2-2 | 4 | 3 | Pass |
| Example 2-3 | 4 | 3 | Pass |
| Example 2-4 | 4 | 3 | Pass |
| Example 2-5 | 4 | 3 | Pass |
| Example 2-6 | 4 | 3 | Pass |
| Example 2-7 | 4 | 3 | Pass |
| Example 2-8 | 4 | 3 | Pass |

| | | | |
|---|---|---|---|
| **Example 2-9** | 4 | 3 | **There is smoke** |
| **Example 2-10** | 4 | 3 | **There is smoke** |
| **Example 2-11** | 5 | 4 | **There is smoke** |
| **Comparative example 2-1** | 4 | 3 | **Fire breaking out after smoking** |
| **Comparative example 2-2** | 5 | 4 | **Fire breaking out** |
| Example 3-1 | 4 | 3 | Pass |
| Example 3-2 | 4 | 3 | Pass |
| Example 4-1 | 8 | 8 | Pass |
| Example 4-2 | 8 | 8 | Pass |
| Example 4-3 | 10 | 10 | **There is smoke** |
| **Comparative example 4-1** | 8 | 8 | **Fire breaking out after smoking** |
| Example 5-1 | 8 | 8 | Pass |
| Example 5-2 | 8 | 8 | Pass |
| Example 5-3 | 10 | 10 | **There is smoke** |
| **Comparative example 5-1** | 8 | 8 | **Fire breaking out after smoking** |

In addition, in the present application, if the compacted density of the positive electrode plate or the thickness of the positive electrode film layer is adjusted, the diaphragm resistance value may be affected, and the corresponding battery safety conditions may also change. In the above embodiments, the present application focuses on the actual battery conditions corresponding to the compacted density 3.5 g/cm$^3$ of the positive electrode plate and the thickness 125 microns of the positive electrode film layer. In fact, the thickness of the positive electrode film layer is in a range from 10 $\mu$m to 300 $\mu$m, and the compacted density of the positive electrode plate is in a range from 2.0 to 4.0 g/cm$^3$, which are all within the protection scope of the present application.

As can be seen from Table 2, the secondary battery designed in Comparative Example 2-2 of the present application does not satisfy the parameter requirements listed in Table 1 at the same time, and it quickly catches fire during the cutting process. The secondary batteries designed in Comparative Examples 2-1, 4-1 and 5-1 of the present application do not satisfy the requirement of reasonably controlling the relationship between the use amount of the binder and the molar percentage content of the nickel element in the nickel-containing compound, and may first smoke and then catch fire during the cutting process. In other embodiments, by reasonably controlling the use amount of the binder and matching it with the molar percentage content of the nickel element in the nickel-containing compound, a composite current collector with a suitable thickness is further selected, and with the help of the heat insulation ability of the separator, the prepared electrode assembly, secondary battery, etc. can pass the rigorous cutting test, once again proving that the electrode assembly designed in the present application can improve the safety of the lithium-ion battery on the premise of ensuring the energy density of the lithium-ion battery.

Finally, it should be noted that: the above examples are merely used for illustrating rather than limiting the technical solutions of the present application. Although the present application has been described in detail with reference to the various afore-mentioned examples, those of ordinary skill in the art should understand that the technical solutions specified in the various aforementioned examples can still be modified, or some or all of the technical features can be equivalently substituted; and such modifications or substitutions do not make the essence of the corresponding technical solutions depart from the scope of the technical solutions of the various examples of the present application, which shall fall within the scope of the claims and the specification of the present application. In particular, the technical features mentioned in the various embodiments can be combined in any manner as long as there is no structural conflict. The present application is not limited to the specific examples disclosed herein, but includes all technical solutions falling within the scope of the claims.

**Claims**

1. An electrode assembly, comprising:

   a positive electrode plate, comprising a positive electrode current collector and a positive electrode film layer arranged on at least one surface of the positive electrode current collector;
   a negative electrode plate; and
   a separator;
   wherein the positive electrode film layer comprises a nickel-containing compound and a binder, a molar percentage content of a nickel element in the nickel-containing compound based on a total molar amount of transition elements is Y;
   a mass percentage content of the binder in the positive electrode film layer is X; and
   it is satisfied: $Y/X < 53$.

2. The electrode assembly according to claim 1, wherein it is satisfied: $3 \leq Y/X < 53$.

3. The electrode assembly according to any one of claims 1 to 2, wherein the molar percentage content Y of the nickel element satisfies: $30\% \leq Y \leq 100\%$.

4. The electrode assembly according to any one of claims 1 to 3, wherein the mass percentage content X of the binder in the positive electrode film layer satisfies: $1\% \leq X \leq 10\%$.

5. The electrode assembly according to any one of claims 1 to 4, wherein the positive electrode film layer satisfies any one of the following:

   in a case of (1.1) $80\% \leq Y \leq 100\%$, it is satisfied: $8 \leq Y/X \leq 40$;
   in a case of (1.2) $50\% < Y < 80\%$, it is satisfied: $5 < Y/X < 53$; and
   in a case of (1.3) $30\% \leq Y \leq 50\%$, it is satisfied: $3 \leq Y/X \leq 50$.

6. The electrode assembly according to any one of claims 1 to 5, wherein the positive electrode film layer satisfies any one of the following:

   in a case of (2.1) $80\% \leq Y \leq 100\%$, $2.5\% \leq X \leq 10\%$;
   in a case of (2.2) $50\% < Y < 80\%$, $1.5\% \leq X \leq 10\%$; and
   in a case of (2.3) $30\% \leq Y \leq 50\%$, $1\% \leq X \leq 10\%$.

7. The electrode assembly according to any one of claims 1 to 6, wherein in a case that the positive electrode plate has a compacted density of 3.5 g/cm$^3$, any one of the following is satisfied:

   in a case of (3.1) $80\% \leq Y \leq 100\%$, a resistance of the positive electrode plate is $\geq 1.81$ m$\Omega$;
   in a case of (3.2) $50\% < Y < 80\%$, the resistance of the positive electrode plate is $\geq 0.40$ m$\Omega$; and
   in a case of (3.3) $30\% \leq Y \leq 50\%$, the resistance of the positive electrode plate is $\geq 0.30$ m$\Omega$.

8. The electrode assembly according to any one of claims 1 to 7, wherein the negative electrode plate comprises a negative electrode current collector, the positive electrode current collector and/or the negative electrode current collector is a composite current collector, and the composite current collector comprises a support layer and a conductive layer arranged on at least one side surface of the support layer; and a thickness of the conductive layer is not greater than a thickness of the support layer.

9. The electrode assembly according to claim 8, wherein,

   the thickness of the support layer and the molar percentage content of the nickel element in the nickel-containing

compound satisfy:

$$D1 \geq Y \times 10 + 2;$$

where D1 is the thickness of the support layer and has a unit of $\mu$m; and
Y is the molar percentage content % of the nickel element in the nickel-containing compound.

10. The electrode assembly according to claim 8 or 9, wherein the thickness of the support layer satisfies: 2 $\mu$m$\leq$D1$\leq$30 $\mu$m, preferably, 5 $\mu$m$\leq$D1$\leq$20 $\mu$m.

11. The electrode assembly according to any one of claims 8 to 10, wherein the thickness of the conductive layer is D2, satisfying: D2$\leq$3 $\mu$m; preferably, 30 nm$\leq$D2$\leq$3 $\mu$m.

12. The electrode assembly according to any one of claims 8 to 11, wherein the composite current collector further comprises a protective layer arranged on at least one side surface of the conductive layer.

13. The electrode assembly according to claim 12, wherein a thickness of the protective layer is D4, and D4 and the thickness D2 of the conductive layer satisfy: D4$\leq$0.1$\times$D2;

preferably, 1 nm$\leq$D4$\leq$200 nm; and more preferably, 20 nm$\leq$D4$\leq$150 nm.

14. The electrode assembly according to any one of claims 1 to 13, wherein a thickness of the positive electrode film layer is D3, and D3 and the thickness D1 of the support layer satisfy: 1$\leq$D3/D1$\leq$300.

15. The electrode assembly according to claim 14, wherein the thickness D3 of the positive electrode film layer satisfies: 10 $\mu$m$\leq$D3$\leq$300 $\mu$m, preferably, 80 $\mu$m$\leq$D3$\leq$200 $\mu$m.

16. The electrode assembly according to any one of claims 1 to 15, wherein a shrinkage rate of the separator in 130°C comprises an MD shrinkage rate and a TD shrinkage rate;

the MD shrinkage rate and/or TD shrinkage rate are/is $\leq$(13-Y$\times$10)/100;
Y is the molar percentage content % of the nickel element in the nickel-containing compound;
the MD shrinkage rate is a heat shrinkage rate in a machine direction of the separator; and
the TD shrinkage rate is a heat shrinkage rate in a transverse direction of the separator.

17. The electrode assembly according to claim 16, wherein the separator comprises a base membrane and a coating arranged on at least one side surface of the base membrane; and
preferably, the coating comprises an organic polymer fiber, and the organic polymer fiber comprises one or a combination of two or more of an aramid fiber, a polyacrylonitrile fiber, a polyimide fiber, a polycarbonate fiber, a polyphenylene sulfide fiber, a polyetheretherketone fiber, a polysulfone fiber, and a polyarylate fiber.

18. The electrode assembly according to any one of claims 1 to 17, wherein the nickel-containing compound comprises one or a combination of two or more of a lithium nickel oxide, a lithium nickel cobalt oxide, a lithium nickel manganese oxide, a lithium nickel cobalt manganese oxide, a lithium nickel cobalt aluminum oxide, and modified compounds thereof.

19. The electrode assembly according to any one of claims 1 to 17, wherein the binder comprises a fluoropolymer, and the fluoropolymer comprises one or a combination of two or more of polyvinylidene fluoride, vinylidene fluoride-tetrafluoroethylene-propylene terpolymer, vinylidene fluoride-hexafluoropropylene-tetrafluoroethylene terpolymer, and fluorine-containing acrylate resin.

20. A secondary battery, comprising the electrode assembly according to any one of claims 1 to 19.

21. An electrical apparatus, comprising the electrode assembly according to any one of claims 1 to 19 or the secondary battery according to claim 20.

**5**

**FIG. 1**

**FIG. 2**

100

120

110

FIG. 3

100

112

110

120

111

FIG. 4

100

D3

D4

D2

D1

120

113

112

111

110

FIG. 5

**FIG. 6**

**FIG. 7**

## INTERNATIONAL SEARCH REPORT

| International application No. |
| --- |
| **PCT/CN2024/092890** |

| A. | CLASSIFICATION OF SUBJECT MATTER |
| --- | --- |

H01M 4/62(2006.01)i; H01M 4/131(2010.01)i; H01M 4/52(2010.01)i; H01M 4/66(2006.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT; ISI: 宁德时代, 镍, 含量, 粘, 黏, 合, 接, 结, 剂, 集流, 集电, 复合, 层, 隔膜, 隔离膜, 收缩率, nickel, content, binder, current collector, separator, shrinkage

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110943222 A (CONTEMPORARY AMPEREX TECHNOLOGY CO., LTD.) 31 March 2020 (2020-03-31) description, paragraphs [0007]-[0301] | 1-15, 18-21 |
| Y | CN 110943222 A (CONTEMPORARY AMPEREX TECHNOLOGY CO., LTD.) 31 March 2020 (2020-03-31) description, paragraphs [0007]-[0301] | 16, 17 |
| Y | JP 2015195195 A (HITACHI MAXELL LTD.) 05 November 2015 (2015-11-05) description, paragraphs [0083]-[0121] | 16, 17 |
| X | JP 2022146805 A (SEKISUI CHEMICAL CO., LTD.) 05 October 2022 (2022-10-05) description, paragraphs [0007]-[0069] | 1-7, 18-21 |
| Y | JP 2022146805 A (SEKISUI CHEMICAL CO., LTD.) 05 October 2022 (2022-10-05) description, paragraphs [0007]-[0069] | 16, 17 |
| A | CN 113629222 A (SINOCHEM INTERNATIONAL CORP.) 09 November 2021 (2021-11-09) entire document | 1-21 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 July 2024** | **03 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/092890**

| C. | DOCUMENTS CONSIDERED TO BE RELEVANT | |
|---|---|---|
| Category* | Citation of document, with indication, where appropriate, of the relevant passages | Relevant to claim No. |
| A | CN 116325213 A (LG ENERGY SOLUTION LTD.) 23 June 2023 (2023-06-23)<br>entire document | 1-21 |

Form PCT/ISA/210 (second sheet) (July 2022)

**INTERNATIONAL SEARCH REPORT**
**Information on patent family members**

International application No.

**PCT/CN2024/092890**

| Patent document cited in search report | | | Publication date (day/month/year) | Patent family member(s) | | | Publication date (day/month/year) |
|---|---|---|---|---|---|---|---|
| CN | 110943222 | A | 31 March 2020 | US | 2022037669 | A1 | 03 February 2022 |
| | | | | WO | 2020211453 | A1 | 22 October 2020 |
| | | | | EP | 3923388 | A1 | 15 December 2021 |
| | | | | EP | 3923388 | A4 | 20 April 2022 |
| | | | | EP | 3923388 | B1 | 21 June 2023 |
| JP | 2015195195 | A | 05 November 2015 | None | | | |
| JP | 2022146805 | A | 05 October 2022 | None | | | |
| CN | 113629222 | A | 09 November 2021 | None | | | |
| CN | 116325213 | A | 23 June 2023 | KR | 20220100537 | A | 15 July 2022 |
| | | | | EP | 4207359 | A1 | 05 July 2023 |
| | | | | WO | 2022149912 | A1 | 14 July 2022 |
| | | | | US | 2024014392 | A1 | 11 January 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311355800